(19) Europäisches Patentamt
European Patent Office
Office européen des brevets

(11) **EP 4 386 541 A1**

(12) **EUROPEAN PATENT APPLICATION**

(43) Date of publication:
**19.06.2024   Bulletin 2024/25**

(21) Application number: **23215939.2**

(22) Date of filing: **12.12.2023**

(51) International Patent Classification (IPC):
**G06F 7/58** (2006.01)

(52) Cooperative Patent Classification (CPC):
**G06F 7/588**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022   US 202218081965**

(71) Applicant: **NXP B.V.**
**5656 AG Eindhoven (NL)**

(72) Inventor: **Fay, Björn**
**5656AG Eindhoven (NL)**

(74) Representative: **Krott, Michel**
**NXP Semiconductors**
**Intellectual Property Group**
**High Tech Campus 60**
**5656 AG  Eindhoven (NL)**

(54)   **RANDOM NUMBER GENERATOR REAL-TIME ENTROPY EVALUATION**

(57)   An entropy generator comprises an entropy source to generate a random bitstream and an entropy evaluator communicatively coupled to the entropy source to receive the random bitstream. The entropy evaluator includes a first counter to maintain a repetition count of one or more patterns of multiple bits successively included in the random bitstream, and an alert generator communicatively coupled to the first counter to generate an alert in response to the repetition count exceeding a defined threshold. The repetition count may be based on one or more exclusive-or (XOR) operations of a current bit of the random bitstream with one or more previous bits of the random bitstream.

**FIG. 1**

EP 4 386 541 A1

**Description**

BACKGROUND

Random number generation is a process by which, often by means of a random number generator (RNG), a sequence of numbers or symbols is generated such that the sequence cannot be reasonably predicted better than by random chance. True random number generators (TRNGs) can be hardware random number generators (HRNGS) that generate random numbers, such that each output is a function of a physical environmental attribute that is constantly changing in a manner that is practically impossible to model. Example sources of this natural entropy include measuring atmospheric noise, thermal noise, cosmic background radiation, radioactive decay (measured over short timescales) and other external electromagnetic and quantum phenomena. In contrast to TRNGs, pseudorandom number generators (PRNGs) are typically seeded by a TRNG, and typically generate data that appears random but is in fact deterministic.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 illustrates an entropy generator that includes an entropy evaluator for testing a generated bitstream for aspects of entropy in accordance with some embodiments.

FIG. 2 illustrates an entropy evaluator implementing a repetition count test.

FIGs. 3-7 respectively illustrate various entropy evaluators enabled to identify multiple bit-pattern repetitions in accordance with some embodiments.

FIGs. 8 and 9 illustrate operational flow diagrams of operational routines for entropy evaluation in accordance with some embodiments.

DETAILED DESCRIPTION

Various certification standards (*e.g.,* AIS 20/31 from the German Federal Office for Information Security (BSI) and SP 800-90 A/B/C from the US National Institute of Standards and Technology NIST)) define details and features of TRNG implementations intended to ensure that the output of such implementations provides an expected level of entropy. Some certification standards require real-time entropy testing (*i.e.,* evaluation during operation) of the TRNG to assure quality of the randomness provided by the TRNG. However, existing real-time entropy tests typically either fail to test for higher-order repetitions that indicate insufficient entropy in a sampled bitstream or are provided by hardware components with undesirably high complexity and/or resource requirements (power consumption, manufacturing footprint, etc.).

Embodiments described herein provide effective and efficient entropy evaluation (including, *e.g.,* real-time entropy evaluation) of a random bitstream (such as may be provided, for example, by a random number generator). Advantages of such embodiments include utilizing a relatively small operational footprint (*e.g.,* a relatively small quantity of counters) to provide higher-order entropy evaluation than previous approaches.

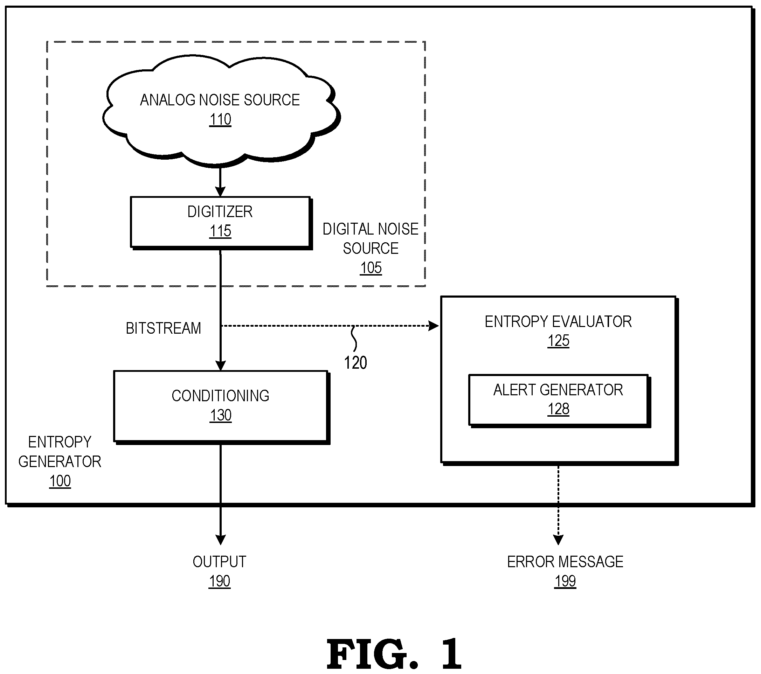

FIG. 1 illustrates an entropy generator 100 that includes an entropy evaluator 125 for testing a generated random bitstream 120 for aspects of entropy in accordance with some embodiments. It will be appreciated that in discussions herein, reference to operations performed on successive (contiguous) bits of a bitstream may refer to operations performed on values successively sampled from that bitstream. That is, a reference to successive bits $b_i$, $b_{i+1}$, ..., $b_n$ of a binary bitstream A may refer to successive bit values occurring sequentially in the binary bitstream A, or may refer to successive sample values sampled from that binary bitstream A (such that the successive sample values may be considered to form a second binary bitstream B).

In the depicted embodiment, the entropy generator 100 includes an entropy source in the form of digital noise source 105, which comprises an analog noise source 110 communicatively coupled to a digitizer 115. As noted elsewhere herein, the analog noise source 110 provides an analog output representing a physical environmental attribute that is changing in a manner that is practically impossible to model, such as atmospheric noise, thermal noise, cosmic background radiation, radioactive decay, or other electromagnetic and/or quantum phenomena.

In operation, the digitizer 115 quantizes the analog output of the analog noise source 110 to generate the random bitstream 120. The random bitstream 120 is provided as input to both the entropy evaluator 125 and to a conditioning block 130, which in some embodiments performs one or more post-processing operations (*e.g.,* anti-biasing, E-transforms, von Neumann operations, bit shifting, etc.) before providing an output bitstream 190 of the entropy generator 100. In certain embodiments, such post-processing operations are intended to eliminate or reduce imperfections of the random bitstream 120, such as to remove an amount of bias in the random bitstream.

Embodiments of the entropy evaluator 125 perform various testing operations on samples obtained from the random bitstream 120, discussed in greater detail elsewhere herein. The entropy evaluator 125 includes an alert generator 128 to generate an alert such as error message 199 in the event that the random bitstream is determined to fail one or more of those testing operations. In certain embodiments, various actions may be taken in response to the alert, such as to prevent use of the output bitstream 190, to at least temporarily cease operation of the entropy generator 100, etc.

One example of a real-time entropy test is the repetition count test (RCT), designed to quickly detect catastrophic failures that cause an entropy source to become "stuck" on a single output value for a long period of time. This test is intended to detect a total failure of the entropy source.

As used herein, the min-entropy (in bits) of a random variable X is the largest value $m$ having the property that each observation of X provides at least $m$ bits of information. Given an assessed min-entropy $H$ of an entropy source, the probability of that entropy source generating $n$ identical samples consecutively is at most $2^{-H(n-1)}$. The entropy source fails the RCT if a sample is successively repeated $C$ or more times. The cutoff threshold value $C$ is determined by the acceptable false-positive probability $\alpha$ and the entropy estimate $H$ using the following formula:

$$C = 1 + \left\lceil \frac{-\log_2 \alpha}{H} \right\rceil$$

This value of $C$ is the smallest integer satisfying the inequality $\alpha \geq 2^{-H(C-1)}$, which ensures that the probability of obtaining a sequence of identical values from $C$ consecutive entropy source samples is at most $\alpha$. For example, for

$\alpha = 2^{-20}$, an entropy source with $H = 2.0$ bits per sample would have a cutoff threshold value $C$ of 1 + $\lceil 20/2.0 \rceil = 11$ .

Given a continuous sequence of entropy source samples, and the cutoff threshold value $C$, the RCT is performed as illustrated by the following pseudocode in which *next*() yields the next sample from the entropy source:

1. A=*next*()
2. $B = 1$
3. $X = next$()
4. If ($X$ = A),
   a. $B=B+1$
   b. If ($B \geq C$), signal a failure.
5. else:
   a. $A=X$
   b. $B=1$
6. Repeat Step 3.

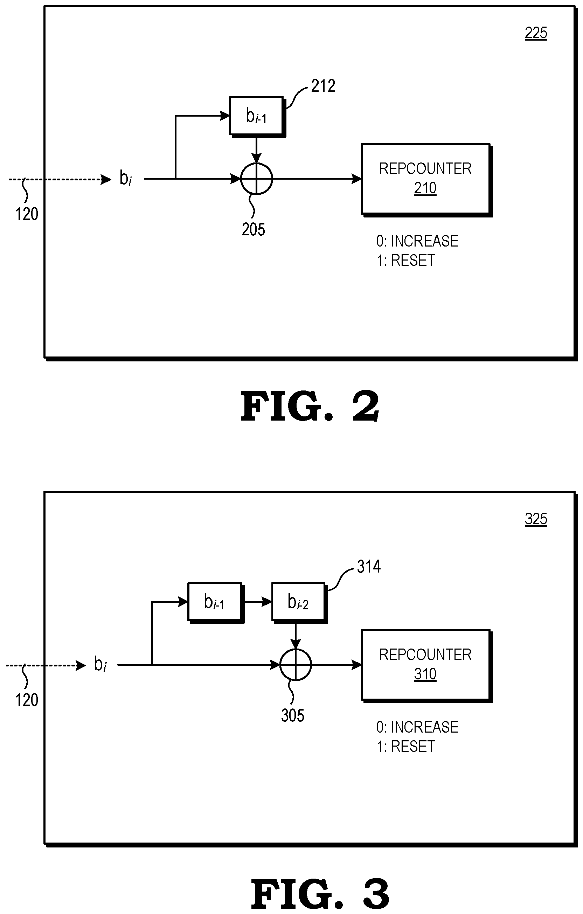

FIG. 2 illustrates an entropy evaluator 225 implementing a repetition count test. The entropy evaluator 225 may be utilized in a manner similar to that described above with respect to the entropy evaluator 125 of FIG. 1, such that it accepts as input a random bitstream and generates an error responsive to one or more defined criteria being satisfied - that is, responsive to an indicated entropic failure of the random bitstream.

During operation, the random bitstream 120 is supplied to the entropy evaluator 225 for testing. A single state bit register 212 (denoted A in the pseudocode above) stores an immediately previous bit $b_{i-1}$, enabling a comparison with current bit $b_i$ via an exclusive-or (XOR) gate 205, which provides the result of an XOR operation on the successive bits $b_i$ and $b_{i-1}$ to a repetition counter 210. As used herein, to XOR two bits indicates to perform a logical exclusive-or operation on values representationally stored by hardware circuitry corresponding to each of those two bits (e.g. a switch, gate, transistor, memory cell, one or more portions of a memory array, etc.).

The repetition counter 210 is configured to increment when its input is zero, and to reset when its input is one. Thus, if $b_i$ and $b_{i-1}$ are the same, the output of XOR gate 205 will be 0 and the repetition counter 210 will increase its count by 1. If $b_i$ and $b_{i-1}$ are different, the output of XOR gate 205 will be 1 and the repetition counter 210 will reset (*e.g.,* to a value of 0). Mathematically, the entropy evaluator 225 is determining whether the first-order derivative of the random bitstream 120 is 0, which indicates that the actual value of the random bitstream stays constant (*i.e.,* repeats). If the repetition counter 210 exceeds a defined threshold (such as a configured value for cutoff threshold value *C*), the entropy evaluator 225 generates an error (such as via an alert generator, not shown).

The cutoff threshold value *C* can be applied to any entropy estimate *H*, including very small and very large estimates. However, the repetition count test only detects catastrophic failures of an evaluated entropy source. For example, an entropy source evaluated at eight bits of min-entropy per sample has a cutoff threshold value of 6 (six repetitions) to ensure a false-positive rate of approximately once per $10^{12}$ samples generated. If that entropy source somehow fails to the point that each sample had a 1/16 probability of being the same as the previous sample, such that it then provides only four bits of min-entropy per sample, it would still be expected to take approximately one million samples before the entropy source would fail the repetition count test.

FIG. 3 illustrates an entropy evaluator 325 implementing an improved repetition count test in accordance with some embodiments. The entropy evaluator 325 may be utilized in a manner similar to that described above with respect to the entropy evaluators 125 and 225 of FIGs. 1 and 2, respectively, such that it accepts as input the random bitstream 120 and generates an error responsive to an indicated entropic failure of that random bitstream.

In the depicted embodiment, the entropy evaluator 325 not only counts repetitions of individual bit values (identified as repeated two-bit patterns of '00' and '11'), but also counts repetitions of state changes (toggles) by effectively evaluating second-order derivatives of the input random bitstream 120 (identified as repeated two-bit patterns of '01' and ' 10'). It will be appreciated that the second-order derivative $f''(i)$ for the random bitstream 120 is as follows:

$$f''(i) = f'(i) \oplus f'(i-1) = (b_i \oplus b_{i-1}) \oplus (b_{i-1} \oplus b_{i-2}) = b_i \oplus b_{i-2},$$

where $\oplus$ denotes an XOR operation.

The depicted embodiment of entropy evaluator 325 provides a comparison of bits $b_i$ and $b_{i-2}$ (the latter of which is stored in and read from a bit register 314) via the XOR gate 305, the output of which is provided to a repetition counter 310. In a manner similar to that noted above with respect to repetition counter 210 of FIG. 2, the repetition counter 310 is configured to increment when its input is 0, and to reset when its input is 1. Thus, in the depicted embodiment if $b_i$ and $b_{i-2}$ are the same, the output of XOR gate 305 will be 0 and the repetition counter 310 will increase its count by 1. If $b_i$ and $b_{i-2}$ are different, the output of XOR gate 305 will be 1 and the repetition counter 310 will reset. Mathematically, the entropy evaluator 325 determines whether the second-order derivative of the random bitstream 120 is 0, which may indicate non-random repetition of two-bit patterns in the random bitstream. If the repetition counter 310 exceeds a defined threshold (such as a configured value for a cutoff threshold value *C*), the entropy evaluator 325 generates an error (such as via an alert generator, not shown).

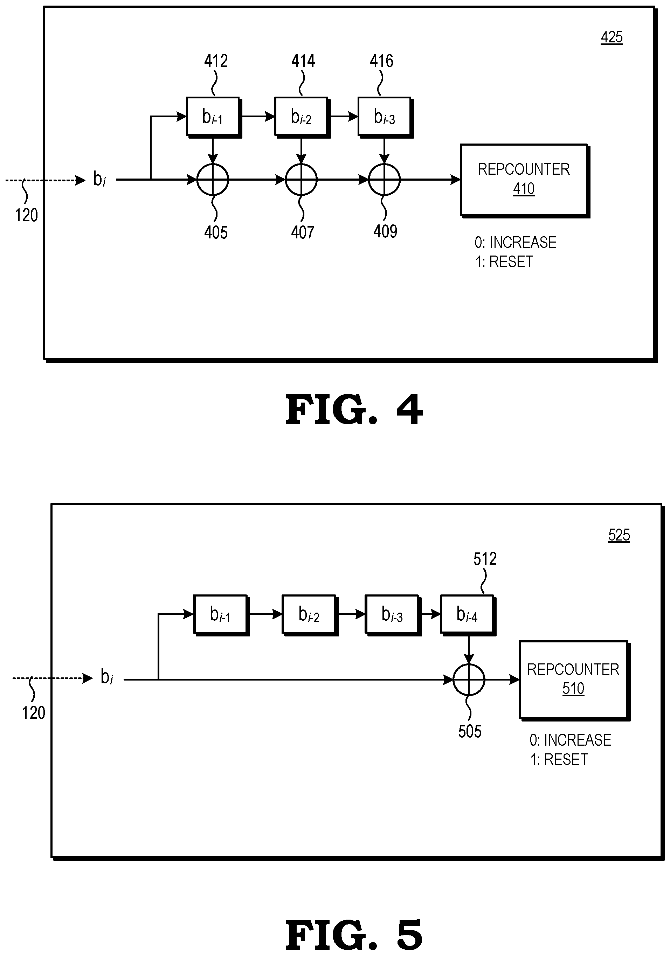

FIG. 4 illustrates an entropy evaluator 425 implementing an improved repetition count test in accordance with some embodiments. In a manner similar to that described above with respect to the entropy evaluators 125 and 225 of FIGs. 1 and 2, the entropy evaluator 425 accepts as input a random bitstream 120 and generates an error responsive to an indicated entropic failure of that random bitstream.

In the depicted embodiment, the entropy evaluator 425 provides a comparison of bits $b_i$ and $b_{i-1}$ (stored in a bit register 412) via a first XOR gate 405. The output of this operation ($b_i \oplus b_{i-1}$) is then compared with bit $b_{i-2}$ (stored in bit register 414) via a second XOR gate 407, the output of which is then compared with bit $b_{i-3}$ (stored in bit register 416) via a third XOR gate 409. The output of the third XOR gate 409 is provided to a repetition counter 410, which is configured in a manner similar to that discussed above with respect to repetition counters 210 and 310 of FIGs. 2 and 3, respectively. In particular, the repetition counter 410 is configured to increment when its input is 0, and to reset when its input is 1.

In this manner, the entropy evaluator 425 is configured to count repetitions of 4-bit patterns in the random bitstream 120 by effectively evaluating third-order derivatives $f'''(i)$ of that bitstream, as follows:

$$f'''(i) = f''(i) \oplus f''(i-1) = \cdots = b_i \oplus b_{i-1} \oplus b_{i-2} \oplus b_{i-3}$$

By evaluating the third-order derivative, the entropy evaluator 425 is enabled to detect repetitions of any of the following 4-bit patterns:

- 0000...0000 (also detectable via first-order derivatives)
- 1111...1111 (also detectable via first-order derivatives)
- 1010...1010, 0101...0101 (also detectable via second-order derivatives)
- 1100...1100, 0110...0110, 0011...0011, 1001... 1001 (third-order derivatives)

In a manner similar to that described above with respect to the entropy evaluators 225, 325, if the repetition counter 410 exceeds a defined threshold (such as a configured value for a cutoff threshold value C), the entropy evaluator 425 generates an error.

FIG. 5 illustrates another entropy evaluator 525 implementing an improved repetition count test in accordance with some embodiments. In a manner similar to that described above with respect to the entropy evaluators 125, 225, 325, 425 respectively of FIGs. 1-4, the entropy evaluator 525 accepts as input a random bitstream 120 and generates an error responsive to an indicated entropic failure of that random bitstream.

Notably, the depicted embodiment of entropy evaluator 525 is structurally similar to entropy evaluator 225 of FIG. 2. However, by utilizing previous bit $b_{i-4}$ (stored in a bit register 512), the output of XOR gate 505 effectuates the fourth-order derivative $f^{(4)}(i) = b_i \oplus b_{i-4}$ and thus is configured to count (via repetition counter 510, which is configured substantially identically to repetition counters 210, 310, 410, discussed above) all possible 4-bit pattern repetitions, including those corresponding to the third-order derivatives noted above. In a manner similar to that described above with respect to the entropy evaluators 225, 325, 425, if the repetition counter 510 exceeds a defined threshold (such as a configured value for a cutoff threshold value C), the entropy evaluator 525 generates an error.

Another example of a real-time entropy test is the adaptive proportion test, which is designed to detect a large loss of entropy that might occur as a result of some physical failure or environmental change affecting the entropy source. The adaptive proportion test measures a local frequency of occurrence of a sample value in a sequence of entropy source samples (such as a random bitstream) to determine if the sample value occurs too frequently. Thus, the test is able to detect when a particular value begins to occur much more frequently than expected, given the source's assessed entropy per sample. The adaptive proportion test is intended to detect more subtle failures of an entropy source than those detected by the repetition count test.

The adaptive proportion test takes a sample from an entropy source, and then counts the number of times that the same value occurs within the next $W-1$ samples. If that count reaches the cutoff threshold value $C$, an error is generated to indicate entropic failure. The window size $W$ is selected based on the alphabet size (the quantity of distinct possible values potentially produced by the entropy source). For example, in certain embodiments intended for use in accordance with a NIST SP 800-90B standard, a window size of 1024 bits may be used for binary entropy sources (that is, for entropy sources that produce only two distinct values) or 512 otherwise (that is, the entropy source produces more than two distinct values). It will be appreciated that in various embodiments, the selected window size $W$ may be assigned other values.

Given a continuous sequence of noise samples, the cutoff threshold value $C$ and the window size $W$, the adaptive proportion test is performed as follows, in which *next*() yields the next sample from the entropy source.:

1. A = *next*()
2. $B=1$.
3. For $i = 1$ to $W-1$
    a. If (A = next()) $B=B+1$
    b. If $(B \geq C)$ signal a failure

4. Go to Step 1.

The cutoff threshold value C is chosen such that the probability of observing $C$ or more identical samples in a window size of $W$ is at most $\alpha$. This is described mathematically as follows:

$$Pr(B \geq C) \leq \alpha.$$

Thus, the adaptive proportion test counts how often a first bit of a window appears in that window, and then tests to determine that this does not happen too often. However, it fails to detect any abnormal repetition of unbiased state changes (toggling). For example, the adaptive proportion test is unable to determine any problem with a repeated sequence such as 10101010 - which while perfectly unbiased, also has no entropy.

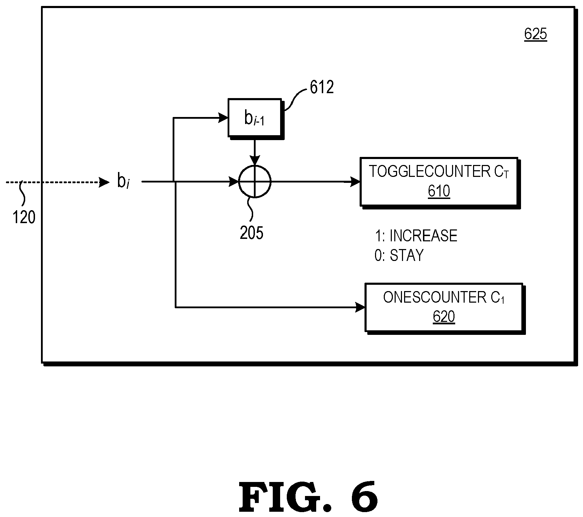

FIG. 6 illustrates an entropy evaluator 625 that utilizes two counters to maintain a respective count of toggles (state changes) and ones in a random bitstream 120 and detects entropy failures via one or more calculated statistics related to those maintained counts, as described below.

The entropy evaluator 625 utilizes a window size $N$ selected based on system requirements. In certain embodiments, the window size $N$ is a multiple of the postprocessing block size. For example, certain embodiments coupled to random number generators implementing the Advanced Encryption Standard (AES, which uses a 16-byte block size) utilize a $N$ = 128-bit window size.

For all bits in a current $N$-bit window of an input random bitstream 120, the entropy evaluator 625 monitors two features. First, it maintains a count of the number of 1-bits ($C_i$) in the current window via a ones counter 620- that is, it computes the Hamming weight of the current window under inspection. Second, it additionally maintains a count $C_T$ via a toggle counter 610 of the number of bit state changes in the current window: a sliding two-bit window ($b_{i-1}b_i$), $0 \leq i < N - 1$, is moving over the current window of size $N$ and, using the output of XOR gate 605, increases the toggle counter 610 every time $b_i \neq b_{i-1}$, where $b_{i-1}$ is stored and read from bit register 612. Once the current window is completed, the two values $C_T$ and $C_1$ can be read from the respective toggle counter 610 and ones counter 620. Using these two counters, the entropy evaluator 625 is enabled to determine statistical health information that enables detection of a drop in entropy and unwanted statistical behavior.

In particular, using these two counters, in the depicted embodiment the entropy evaluator 625 is enabled to track all two-bit patterns (00, 01, 10, and 11) occurring in the random bitstream 120, as follows:

$$\text{Count}(0) = N - C_1$$

$$\text{Count}(01) = (C_T >> 1) + (C_T \% 2) * b_{N-1}$$

$$\text{Count}(10) = C_T - \text{Count}(01)$$

$$\text{Count}(11) = C_1 - \text{Count}(01)$$

$$\text{Count}(00) = \text{Count}(0) - \text{Count}(10)$$

where Count(xx) indicates the count value for the bit pattern 'xx' being counted, and where $b_{N-1}$ is the value of the last bit in the window. If the values for any of these tracked or derived counts exceed a defined threshold, the entropy evaluator 725 generates an error.

Even assuming that the bits in a given window of size $N$ are independent and identically distributed with respect to Bin($N$, 1/2), the two random variables $C_1$ and $C_T$ are not independent. An ideal distribution of the joint vector ($C_1$, $C_T$) is as follows:

$$P(C_1 = i, C_T = j)$$

Taken separately,

$$P(C_1 = i) = \binom{N}{i} \cdot 2^{-N}$$

and

$$P(C_T = j) = \binom{N-1}{j} \cdot 2^{-N+1}$$

are binomially distributed. The following statistics illustrate the computations associated with their joint distribution:

$$S_1 = \frac{c_1 - m_1}{\sigma_1} \sim N(0,1)$$

$$S_T = \frac{C_T - m_T}{\sigma_T} \sim N(0,1)$$

Here, $m_i$ and $\sigma_i$ denote the expected mean and the expected standard deviation of $C_1$, resp. $C_T$. For ease of computation (only non-negative integers), two one-dimensional statistics are utilized:

$$S_1' = (C_1 - m_1)^2 \sim \sigma_1^2 \cdot \chi^2(df = 1) \qquad (1)$$

$$S_T' = (C_T - m_T)^2 \sim \sigma_T^2 \cdot \chi^2(df = 1) \qquad (2)$$

These statistics $S_1'$ and $S_T'$ are distributed according to a $\chi^2$-distribution with one degree of freedom (*df*). These allow two one-sided checks against a well-known distribution. For a two-dimensional check, the statistic is modified based on the dependency present in the two-dimensional distribution. Thus, $C_T$ is replaced by:

$$C_T' = C_T + \frac{(C_1 - m_1)^2}{N/2}$$

The two-dimensional health check is therefore defined by

$$S_2 = \frac{(C_1 - m_1)^2}{\sigma_1^2} + \frac{(C_T' - m_T)^2}{\sigma_T^2}$$

$S_2$ is roughly $\chi^2(df = 2)$ distributed, and thus using integer arithmetic:

$$S_2' = (C_1 - m_1)^2 \cdot \sigma_T^2 + (C_T' - m_T)^2 \cdot \sigma_1^2 \sim \sigma_1^2 \sigma_T^2 \cdot \chi^2(df = 2) \qquad (3)$$

From which:

$$S_1' \geq B_1 \cdot \sigma_1^2$$

$$S_T' \geq B_1 \cdot \sigma_T^2$$

$$S_2' \geq B_2 \cdot \sigma_1^2 \sigma_T^2$$

where $B_1$, $B_2$ are $\chi^2$ (Chi-square) thresholds that depend on a selected significance level $\alpha$. Based on different significance levels $\alpha = 2^{-20}$, $2^{-30}$, $2^{-40}$, we would end up with the following example $\chi^2$ (Chi-square) thresholds:

Table 1: Chi-square thresholds for *df* = 1

| $\alpha$ | $\chi^2$-threshold for $S_1'$ (resp. $S_T'$) |
|---|---|
| $2^{-20}$ | $24.019450 \cdot \sigma_i^2$ |
| $2^{-30}$ | $37.463658 \cdot \sigma_i^2$ |

(continued)

| $\alpha$ | $\chi^2$-threshold for $S'_1$ (resp. $S'_T$ ) |
|---|---|
| **2⁻⁴⁰** | $51.030361 \cdot \sigma_i^2$ |

Table 2: Chi-square threshold for *df* = 2

| $\alpha$ | $\chi^2$-threshold for $S'_2$ |
|---|---|
| **2⁻²⁰** | $27.725887 \cdot \sigma_1^2 \sigma_T^2$ |
| **2⁻³⁰** | $41.588831 \cdot \sigma_1^2 \sigma_T^2$ |
| **2⁻⁴⁰** | $55.451774 \cdot \sigma_1^2 \sigma_T^2$ |

For simplicity, assume $N = 384$. By using statistics calculated based on a selected significance level $\alpha$, embodiments of the entropy evaluator 625 provide an implementation of two statistical tests and avoids division operations entirely. In particular, based on equation (3) and the modified definition for $C'_T$, the entropy evaluator 625 uses the fact that $N/2 = 192 = 3 \cdot 64$ and that division by 64 is merely a right shift. By multiplying the original check by 9, the relevant statistical calculations only need additions, multiplications and shifts:

$$S'_2 = (C_1 - m_1)^2 \cdot \sigma_T^2 + (C'_T - m_T)^2 \cdot \sigma_1^2 \geq B_2 \cdot \sigma_1^2 \sigma_T^2$$

$$9 \cdot S'_2 = 9 \cdot (C_1 - m_1)^2 \cdot \sigma_T^2 + (3 \cdot C_T + (C_1 - m_1)^2 / 64 - 3 \cdot m_T)^2 \cdot \sigma_1^2$$

$$\geq 9 \cdot B_2 \cdot \sigma_1^2 \sigma_T^2$$

For improving the accuracy of the computations, the entropy evaluator 625 can additionally multiply by $2^4$ and still stay within a 32-bit word length. The entropy evaluator 625 also adds 8 before the division by 16 to achieve rounded results after division.

$$16 \cdot 9 \cdot (C_1 - m_1)^2 \cdot \sigma_T^2 + (4 \cdot 3 \cdot C_T + ((C_1 - m_1)^2 + 8) / 16 - 4 \cdot 3 \cdot m_T)^2 \cdot \sigma_1^2$$

$$\geq 16 \cdot 9 \cdot B_2 \cdot \sigma_1^2 \sigma_T^2$$

Approximations of the $\chi^2$-thresholds $B_1$, $B_2$ may be included as in Table 1 and Table 2 in reference computations by

$$B_1 = \frac{787069.3 + (x - 20) \cdot 43731.1}{2^{15}}$$

$$B_2 = \frac{x \cdot 22713.05}{2^{14}}$$

where $x$ corresponds to $\alpha = 2^{-x}$, so $x \in \{20, \dots 40, \dots\}$. This enables sensitivity adjustments to the selected significance

level $\alpha$ via configuration parameters. In certain embodiments, the individual one and two-dimensional test parameters may be modified accordingly, such as by selecting $x_1 = x + 2$ and $x_2 = x + 1$ (so 1/4, resp. 1/2).

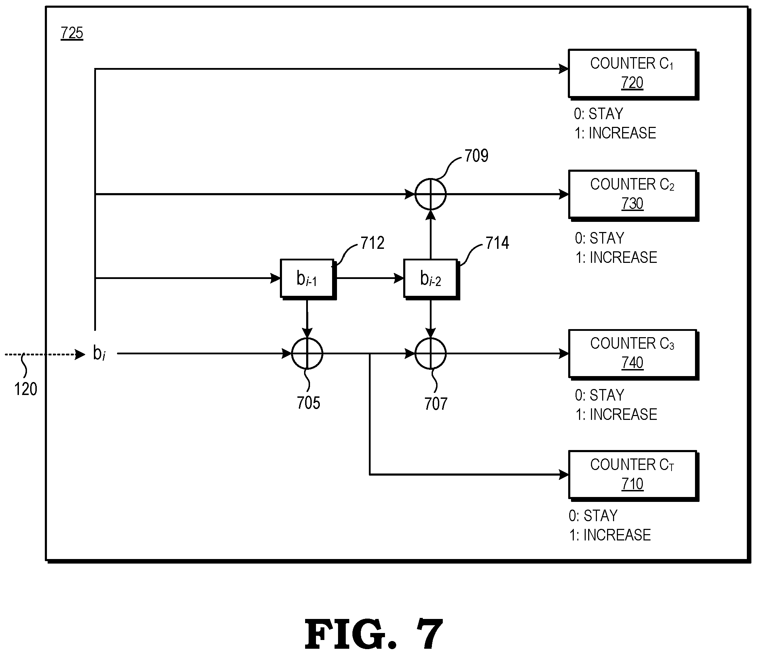

FIG. 7 illustrates an entropy evaluator 725 that, in a manner similar to that described above with respect to the entropy evaluator 625 of FIG. 6, tracks one or more derivatives of a random bitstream 120 using one or more counters, and detects repetitions of multiple bit patterns by utilizing one or more statistics related to those tracked derivatives.

As with the entropy evaluator 625, the entropy evaluator 725 utilizes a window size $N$, selected based on system requirements, such that the entropy evaluator 725 monitors counts and count-based statistics for all bits in a current $N$-bit window of an input random bitstream 120. However, in contrast to the two-counter arrangement of entropy evaluator 625, the entropy evaluator 725 utilizes two additional counters to provide a four-counter arrangement that can track all 3-bit pattern repetitions occurring in the random bitstream 120.

In the depicted embodiment, the entropy evaluator 725 includes a $C_1$ counter 720, by which (in a manner similar to that described above with respect to ones counter 620 of FIG. 6) the entropy evaluator 725 maintains a count of the number of 1-bits in the current N-sized window, effectively computing its Hamming weight. The $C_2$ counter 730 maintains a count based on an output of XOR gate 709, which implements $b_i \oplus b_{i-2}$ (with the value of bit $b_{i-2}$ being stored and read from bit register 714). A third $C_3$ counter 740 maintains a count based on the output of XOR gate 707, which implements $b_i \oplus b_{i-1} \oplus b_{i-2}$ based on the output of XOR gate 705 (which in turn implements $b_i \oplus b_{i-1}$). A fourth $C_T$ counter 710 counts bit state changes (toggles) in the current window in a manner similar to that described above with respect to toggle counter 610 of FIG. 6, and in particular increases (based on output of the XOR gate 705) every time $b_i \neq b_{i-1}$. In the depicted embodiment, once the current window is completed, the counts maintained by the respective counters 710, 720, 730, 740 are utilized to derive 2- and 3-bit pattern repetition counts as follows.

- $$\text{Count}(0) = N - C_1$$

- $$\text{Count}(01) = (C_T >> 1) + (C_T \% 2) * b_{N-1}$$

- $$\text{Count}(10) = C_T - \text{Count}(01)$$

- $$\text{Count}(11) = C_1 - \text{Count}(01)$$

- $$\text{Count}(00) = \text{Count}(0) - \text{Count}(10)$$

- $$\text{Ct0} := \text{Count}(001) + \text{Count}(100) = (C_2 + C_3 - \text{Count}(11) - \text{Count}(10)) / 2$$

- $$\text{Ct1} := \text{Count}(011) + \text{Count}(110) = (C_2 - C_3 + \text{Count}(10) + \text{Count}(11)) / 2$$

- $$\text{Count}(100) = (\text{Ct0} >> 1) + (\text{Ct0} \% 2) * (b_{N-2,N-1} == 00)$$

- $$\text{Count}(001) = \text{Ct0} - \text{Count}(100)$$

- $$\text{Count}(011) = (\text{Ct1} >> 1) + (\text{Ct1} \% 2) * (b_{N-2,N-1} == 11)$$

- $$\text{Count}(110) = \text{Ct1} - \text{Count}(011)$$

- $$\text{Count}(101) = \text{Count}(01) - \text{Count}(001)$$

- $$\mathrm{Count}(111) = \mathrm{Count}(11) - \mathrm{Count}(011)$$

- $$\mathrm{Count}(000) = \mathrm{Count}(00) - \mathrm{Count}(100)$$

- $$\mathrm{Count}(010) = \mathrm{Count}(10) - \mathrm{Count}(110)$$

where $b_{N-1}$ is the value of the last bit in the window. As before, if the values for any of these tracked or derived counts exceed a defined threshold, the entropy evaluator 725 generates an error.

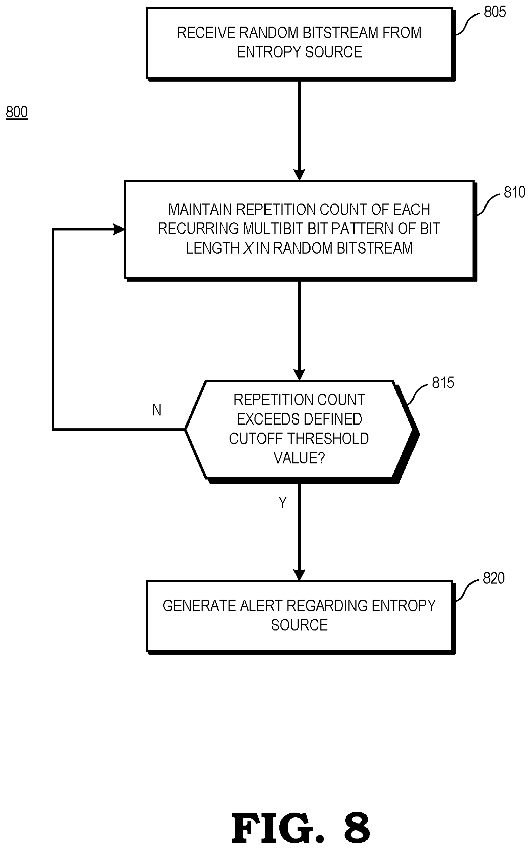

FIG. 8 illustrates an operational flow diagram of an operational routine 800 for entropy evaluation in accordance with some embodiments. The operational routine may be performed, for example, by an entropy evaluator such as any of entropy evaluators 325, 425, 525 as respectively described above with respect to FIGs. 3-5.

The routine begins at block 805, in which a random bitstream (*e.g.,* random bitstream 120) is received from an entropy source (such as digital noise source 105 of FIG. 1). The routine proceeds to block 810.

At block 810, the entropy evaluator maintains a repetition count of each multi-bit bit pattern of a bit length $X$ successively occurring in the random bitstream, such as described above with respect to the recurring 4-bit bit patterns (bit patterns having a bit length of $X$=4) identified by the entropy evaluator 525 of FIG. 5. As discussed above, in various embodiments such recurring bit patterns may be detected via maintaining one or more counts that each substantially tracks a derivative (*e.g.,* a second-, third-, or fourth-derivative) of the random bitstream. The routine proceeds to block 815.

At block 815, the entropy evaluator determines whether the maintained repetition count associated with the multi-bit pattern currently indicated by the previous $X$ bits of the random bitstream exceeds a defined cutoff threshold value. If not, the routine returns to block 810.

If it was determined in block 815 that the maintained repetition count exceeds the defined cutoff threshold value, the routine proceeds to block 820, in which the entropy evaluator generates an alert regarding the entropy source providing the random bitstream.

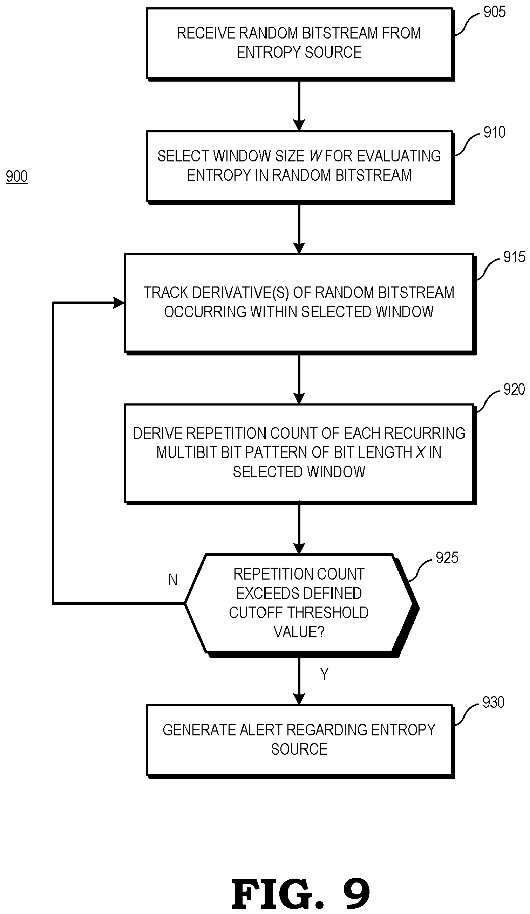

FIG. 9 illustrates an operational flow diagram of an operational routine 900 for entropy evaluation in accordance with some embodiments. The operational routine may be performed, for example, by an entropy evaluator such as entropy evaluators 625, 725 as respectively described above with respect to FIGs. 6 and 7.

The routine begins at block 905, in which a random bitstream (*e.g.,* random bitstream 120) is received from an entropy source (such as digital noise source 105 of FIG. 1). The routine proceeds to block 910.

At block 910, a window size $W$ is selected for evaluating entropy in the random bitstream, such as based on one or more specified standards, upon an alphabet size present in the random bitstream, etc. The routine proceeds to block 915.

At block 915, the entropy evaluator substantially tracks each of one or more derivatives (*e.g.,* a first-, second-, third-, or fourth-order derivative) occurring within the current window in the random bitstream. As described elsewhere herein, such derivatives may be tracked via use of one or more counters coupled to an XOR output of a current bit in the random bitstream with one or more previous bits within the window of selected size W. The routine proceeds to block 920.

At block 920, the entropy evaluator derives a repetition count of each multi-bit bit pattern of a bit length $X$ successively occurring in the current window of selected size $W$. As discussed above, in various embodiments such recurring bit patterns may be derived based on one or more tracked derivatives discussed above with respect to block 915. The routine proceeds to block 925.

At block 925, the entropy evaluator determines whether the maintained repetition count associated with the multi-bit pattern currently indicated for the current window of the random bitstream exceeds a defined cutoff threshold value. If not, the routine returns to block 915.

If it was determined in block 925 that the maintained repetition count exceeds the defined cutoff threshold value, the routine proceeds to block 930, in which the entropy evaluator generates an alert regarding the entropy source providing the random bitstream.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

**Claims**

1. An entropy generator, comprising:

   an entropy source to generate a random bitstream; and
   an entropy evaluator communicatively coupled to the entropy source to receive the random bitstream, the entropy evaluator comprising:

   a first counter to maintain a repetition count of one or more patterns of multiple bits successively included in the random bitstream; and
   an alert generator communicatively coupled to the first counter to generate an alert in response to the repetition count exceeding a defined threshold.

2. The entropy generator of claim 1, wherein the repetition count is based on one or more exclusive-or (XOR) operations of a current bit of the random bitstream with one or more previous bits of the random bitstream.

3. The entropy generator of claim 2, wherein the first counter is one of a set of multiple counters of the entropy evaluator, and wherein each counter of the set of multiple counters receives an output of a respective XOR operation of the one or more XOR operations.

4. The entropy generator of claim 3, wherein each respective XOR operation includes as a first operand the current bit of the random bitstream and includes as a second operand a previous bit of the one or more previous bits of the random bitstream.

5. The entropy generator of any one of claims 2 to 4, wherein the one or more XOR operations include one XOR operation to XOR a current bit $b_i$ of the random bitstream with a previous bit $b_{i-4}$ that precedes the current bit $b_i$ by four positions in the random bitstream.

6. The entropy generator of any one of claims 2 to 5, wherein to maintain the repetition count includes to reset the repetition count in response to a positive outcome of one XOR operation of the one or more XOR operations.

7. The entropy generator of any preceding claim, wherein the repetition count is based on one or more derivatives of the random bitstream.

8. The entropy generator of any preceding claim, wherein the one or more patterns of multiple bits successively included in the random bitstream include any possible pattern of multiple bits having a bit length of x bits, wherein x is greater than 1.

9. A method, comprising:

receiving a random bitstream from an entropy source;
maintaining, with an entropy evaluator, a repetition count of one or more patterns of multiple bits successively included in the random bitstream; and
responsive to the repetition count exceeding a defined threshold, generating an alert regarding the entropy source.

10. The method of claim 9, wherein maintaining the repetition count includes maintaining the repetition count based on one or more exclusive-or (XOR) operations of a current bit of the random bitstream with one or more previous bits of the random bitstream.

11. The method of claim 10, wherein maintaining the repetition count includes maintaining the repetition count based on a set of multiple counters that each receives an output of a respective XOR operation of the one or more XOR operations.

12. The method of claim 10 or 11, comprising performing one XOR operation to XOR a current bit $b_i$ of the random bitstream with a previous bit $b_{i-4}$ that precedes the current bit $b_i$ by four positions in the random bitstream.

13. The method of any one of claims 10 to 12, wherein maintaining the repetition count includes resetting the repetition count in response to a positive outcome of one XOR operation of the one or more XOR operations.

14. The method of any one of claims 9 to 13, wherein maintaining the repetition count includes maintaining the repetition count based on one or more derivatives of the random bitstream.

15. The method of any one of claims 9 to 14, wherein maintaining the repetition count of the one or more patterns of multiple bits successively included in the random bitstream includes maintaining a repetition count of any possible pattern of multiple bits having a bit length of x bits, wherein x is greater than 1.

**FIG. 1**

EP 4 386 541 A1

225

212

$b_{i-1}$

$b_i$

120

⊕

205

REPCOUNTER
210

0: INCREASE
1: RESET

# FIG. 2

325

314

$b_{i-1}$     $b_{i-2}$

$b_i$

120

⊕

305

REPCOUNTER
310

0: INCREASE
1: RESET

# FIG. 3

**FIG. 4**

**FIG. 5**

**FIG. 6**

**FIG. 7**

RECEIVE RANDOM BITSTREAM FROM
ENTROPY SOURCE — 805

800

MAINTAIN REPETITION COUNT OF EACH
RECURRING MULTIBIT BIT PATTERN OF BIT
LENGTH X IN RANDOM BITSTREAM — 810

N

REPETITION COUNT
EXCEEDS DEFINED
CUTOFF THRESHOLD
VALUE? — 815

Y

GENERATE ALERT REGARDING ENTROPY
SOURCE — 820

# FIG. 8

```
┌──────────────────────────────────┐  ╱ 905
│  RECEIVE RANDOM BITSTREAM FROM    │
│         ENTROPY SOURCE            │
└──────────────────────────────────┘

┌──────────────────────────────────┐  ╱ 910
│  SELECT WINDOW SIZE W FOR EVALUATING │
│    ENTROPY IN RANDOM BITSTREAM    │
└──────────────────────────────────┘

┌──────────────────────────────────┐  ╱ 915
│  TRACK DERIVATIVE(S) OF RANDOM BITSTREAM │
│     OCCURRING WITHIN SELECTED WINDOW     │
└──────────────────────────────────┘

┌──────────────────────────────────┐  ╱ 920
│  DERIVE REPETITION COUNT OF EACH RECURRING │
│   MULTIBIT BIT PATTERN OF BIT LENGTH X IN  │
│            SELECTED WINDOW          │
└──────────────────────────────────┘

        REPETITION COUNT          ╱ 925
      EXCEEDS DEFINED
N     CUTOFF THRESHOLD
         VALUE?
                          Y

┌──────────────────────────────────┐  ╱ 930
│  GENERATE ALERT REGARDING ENTROPY │
│            SOURCE                  │
└──────────────────────────────────┘
```

900

## FIG. 9

# EUROPEAN SEARCH REPORT

**EP 4 386 541 A1**

Europäisches Patentamt
European Patent Office
Office européen des brevets

**Application Number**

EP 23 21 5939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/112788 A1 (PQSHIELD LTD [GB]) 2 June 2022 (2022-06-02) * figure 11 * * paragraph [0075] – paragraph [0089] * ----- | 1-7,9-14 | INV. G06F7/58 |
| X | Vladimir Rozic: "Circuit-Level Optimizations for Cryptography: True random number generators: design, evaluation and testing", Dissertation, 1 September 2016 (2016-09-01), pages 1-220, XP055504179, Belgium Retrieved from the Internet: URL:https://www.esat.kuleuven.be/cosic/publications/thesis-286.pdf * figure 4.8 * * table 4.8 * * Section 4 * ----- | 1,5,8,9,12,15 | |
| X | Stephan Müller: "Linux /dev/random – A New Approach", , 8 October 2022 (2022-10-08), XP093157019, Retrieved from the Internet: URL:https://web.archive.org/web/20221129150551if_/https://chronox.de/lrng/doc/lrng.pdf * Sections 2.5.2, 3.3.43 * ----- -/-- | 1,6,7,9,13,14 | **TECHNICAL FIELDS SEARCHED (IPC)** G06F H04L |

The present search report has been drawn up for all claims

| Place of search | Date of completion of the search | Examiner |
|---|---|---|
| Munich | 29 April 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Application Number

EP 23 21 5939

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MELTEM SÖNMEZ TURAN ET AL: "Recommendation for the entropy sources used for random bit generation NIST SP 800-90b", NIST, NATIONAL INSTITUTE OF STANDARDS AND TECHNOLOGY (NIST) , 10 January 2018 (2018-01-10), pages 1-84, XP061057960, DOI: 10.6028/NIST.SP.800-90B Retrieved from the Internet: URL:https://nvlpubs.nist.gov/nistpubs/SpecialPublications/NIST.SP.800-90B.pdf [retrieved on 2018-01-31] * Section 4 * ----- | 1,9 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 29 April 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 5939

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | Publication date | Patent family member(s) | Publication date |
|---|---|---|---|
| WO 2022112788 A1 | 02-06-2022 | EP 4252106 A1 | 04-10-2023 |
| | | FI 4252106 T3 | 19-03-2024 |
| | | JP 2023553348 A | 21-12-2023 |
| | | WO 2022112788 A1 | 02-06-2022 |

EPO FORM P0459

For more details about this annex : see Official Journal of the European Patent Office, No. 12/82